# EUROPEAN PATENT APPLICATION

(11) **EP 4 687 017 A1**
(43) Date of publication of application: **04.02.2026**
(21) Application number: 25190419.9
(22) Date of filing: 18.07.2025
(51) Int. Cl.: G06F 3/04817, G06F 3/0482, G06F 3/0486, G06F 3/0488, G01C 21/36

(54) **INFORMATION PROCESSING APPARATUS AND INFORMATION PROCESSING METHOD**

(30) Priority: 31.07.2024 JP 2024124883
(71) Applicant: TOYOTA JIDOSHA KABUSHIKI KAISHA, Toyota-shi, Aichi-ken 471-8571 (JP)
(72) Inventor: MATSUZAWA, Sota, Toyota-shi, Aichi-ken, 471-8571 (JP)
(74) Representative: TBK

(57) **Abstract**

Provided is a controller configured to execute: receiving a request for changing an arrangement of content within a screen; identifying a first content group, which is a combination of content displayed on the screen at the same time, in a case where the arrangement of the content is changed in response to the request; and prohibiting the first content group from being displaced on the screen in response to the fact that the first content group includes a second content group that is a combination of predetermined content.

## Description

### BACKGROUND

### Technical Field

The present disclosure relates to an information processing apparatus and an information processing method.

### Description of the Related Art

It is known that a plurality of widgets are displayed on the screen of a television and the position of each widget is moved by a remote control operation (see, for example, Patent Literature 1).

### Citation List

### Patent Literature

Patent Literature 1: Japanese Patent No. 5330595

### SUMMARY

An object of the present disclosure is to suppress the occurrence of problems due to a change in the arrangement of content on a screen.

One aspect of the present disclosure is directed to an information processing apparatus including a controller configured to execute:
receiving a signal from a sensor that detects when a user touches a screen;
identifying in real time a first content group, which is a combination of content displayed on the screen at the same time, according to the signal from the sensor in a case where an arrangement of content is changed in response to the fact that the signal from the sensor is a signal corresponding to a change in the arrangement of the content within the screen;
determining in real time whether or not the first content group includes a second content group that is a predetermined combination of content, according to information on the second content group stored in a storage; and
disabling, in response to a determination that the first content group includes the second content group, in real time a function of a user interface for storing, in the storage, information on an arrangement of the first content group within the screen, and outputting in real time a signal for displaying on the screen an image corresponding to the disabling of the function of the user interface.

Another aspect of the present disclosure is directed to an information processing apparatus including a controller configured to execute:
receiving a request for a change in an arrangement of content on a screen;
identifying a first content group, which is a combination of content displayed on the screen at the same time, in a case where the arrangement of the content is changed in response to the request; and
prohibiting the first content group from being displayed on the screen at the same time in response to the fact that the first content group includes a second content group that is a combination of predetermined content.

A further aspect of the present disclosure is directed to an information processing method for causing a computer to execute:
receiving a request for a change in an arrangement of content on a screen;
identifying a first content group, which is a combination of content displayed on the screen at the same time, in a case where the arrangement of the content is changed in response to the request; and
prohibiting the first content group from being displayed on the screen at the same time in response to the fact that the first content group includes a second content group that is a combination of predetermined content.

In addition, a still further aspect of the present disclosure is directed to a program that is executed by the information processing apparatus, or is directed to a storage medium that stores the program in a non-transitory manner.

According to the present disclosure, it is possible to suppress the occurrence of problems due to a change in the arrangement of content on a screen.

### BRIEF DESCRIPTION OF THE DRAWINGS

FIG. 1 is a diagram illustrating a schematic configuration of a vehicle according to a first embodiment;
FIG. 2 is a view illustrating an example of a home screen displayed on a display;
FIG. 3 is a view illustrating an example of a screen (change screen) for changing the arrangement of widgets displayed on the display;
FIG. 4 is a view illustrating another example of the change screen;
FIG. 5 is a view illustrating by way of example a functional configuration of an in-vehicle device;
FIG. 6 is a flowchart of processing in the in-vehicle device when the arrangement order of the widgets is changed on the change screen according to the embodiment; and
FIG. 7 is an example of a home screen that may cause a user to feel uncomfortable.

### DESCRIPTION OF THE EMBODIMENTS

Multimedia devices to be mounted on vehicles have a relatively long development period, and although key requirements are taken into consideration when determining hardware and software architecture, it is difficult to determine specifications based on a precise estimate of all functions. In addition, even if a precise or elaborate estimate could be made, the configuration may be limited to specifications in order to reduce costs. In the case of implementing functions with a high degree of freedom such as widgets on such multimedia devices, if specific widgets are operated at the same time, there is a risk that CPU and storage resources may not be allocated properly, resulting in problems with drawing (rendering) or functions becoming unusable.

For example, there has long been a desire to display a wide-area map and a detailed map side by side. On the other hand, it is conceivable to arrange two widgets for route guidance on a home screen. Here, the route guidance widgets may simultaneously draw two maps, a normal map and an enlarged map of an intersection, at the timing when the vehicle approaches the intersection. That is, in a case where the two route guidance widgets are placed side by side on the same screen, four maps may be drawn. The drawing of maps is a function that consumes a lot of resources, and it can be difficult to simultaneously draw four such maps on hardware with limited specifications. In addition, an increase in the processing load on the system may cause a risk of hindering processing other than the display of the widgets.

In contrast, a controller included in an information processing apparatus, which is one of the aspects of the present disclosure, does not allow content that may cause problems to be displayed on the same screen at the same time. Therefore, the controller receives a request to change the arrangement or layout of the content within the screen. The content includes, for example, content related to display of a map including a current location, playback of video, display of a weather forecast, playback of music, answer to a phone call, display of vehicle information, display of a clock, or the like. These may be widgets. In the display of a map including a current location, for example, an image showing a map, route, current location, and the like is displayed in a display area. In the playback of video, for example, a video is displayed in the display area. The video includes, for example, a television video, a moving image supplied from a storage medium, a moving image supplied from the Internet, or the like. In the weather forecast, for example, a text or an image corresponding to the weather is displayed in the display area. In the playback of music, for example, an image corresponding to the music, a song name, and a time bar are displayed in the display area. In the display of a clock, for example, the current time and date is displayed in the display area. In this way, an image corresponding to the content is displayed on the screen. A plurality of pieces of content may be arranged on the screen. That is, images corresponding to the plurality of pieces of content may be displayed on one screen. Each piece of content can be moved within the screen. The content can be moved by, for example, a drag and drop operation of a user. For example, a first piece of content and a second piece of content may be moved in such a manner that a third piece of content is arranged or placed between the first content and the second content. At this time, the third content is placed at a position at which the second content was placed, and the second and following pieces of content may be shifted in position. For example, when the user touches the screen and makes a finger movement associated with a drag and drop operation, the controller receives a request to change the arrangement of content within the screen. Note that the user touching the screen means that the user touches a touch panel. Further, instead of the touch panel, the movement of fingers of the user may be detected by a camera or the like.

In addition, in the case of changing the arrangement of the pieces of content in response to the request, the controller identifies a first content group that is a combination of content to be displayed on the screen at the same time. The first content group may be identified before the first content group is actually displayed on the screen. That is, the controller may identify the first content group if it is assumed that the arrangement of content is changed as requested. In this case, for example, a screen for changing the arrangement of content may be prepared separately from the home screen for displaying the content. Then, the request to change the arrangement of content may be made by the user moving an icon corresponding to each piece of content on the screen for changing the arrangement of content. In this case, the controller may determine the arrangement of content on the home screen, based on the arrangement of icons on the screen for changing the arrangement of content. As another example, the controller may identify the first content group after actually displaying the first content group on the screen. The first content group is a combination of content displayed within the same screen at the same time. Note that, for example, in a case where page scrolling is possible, the controller may identify a plurality of pieces of content displayed on the same screen at the same time as the first content group for each page.

Then, in response to the fact that the first content group includes the second content group that is a combination of predetermined content, the controller prohibits the first content group from being displayed on the screen at the same time. The second content group is a combination of content that may not be correctly displayed when displayed on the same screen at the same time. The second content group may be determined, for example, according to the performance of a processor or a storage. There may be a plurality of second content groups. The controller prohibits the second content group from being displayed on the same screen at the same time, thus making it possible to suppress the occurrence of problems in drawing. The prohibition may include performing a process not to save or store the changed arrangement of content. For example, the controller may prohibit the first content group from being displayed on the screen at the same time by stopping the function of a push button that is a graphical user interface (GUI) for saving or storing the changed arrangement of content.

Moreover, in response to the fact that the first content group includes the second content group, the controller may prohibit the first content group from being displayed on the screen at the same time by disabling the function of a user interface for storing, in a storage, information on the arrangement of the first content group within the screen. The user interface for storing, in the storage, the information on the arrangement of the first content group within the screen may be, for example, a save button for saving the information on the arrangement of the first content group in the storage, a confirm button for confirming the arrangement of the first content group, and an execute button for executing a change in the arrangement of the first content group. The save button, the confirm button, and the execute button are buttons of a graphical user interface (GUI) that is displayed on the screen. Disabling the function of the user interface includes disabling the functions of the above-mentioned buttons. Disabling the functions of the above-mentioned buttons includes, for example, preventing the user from pressing the above-mentioned buttons, or not storing the information on the arrangement of the first content group even if the user presses the above-mentioned buttons. Further, disabling the functions of the above-mentioned buttons includes, for example, not displaying the above-mentioned buttons or graying out the above-mentioned buttons. **In** the case where the function of the user interface is enabled, the controller can store information on the arrangement of the first content group in the storage, and thereafter the user can use the content in that arrangement. On the other hand, by disabling the function of the user interface, the information on the arrangement of the first content group is prohibited from being stored in the storage, so that the user is unable to use the first content group in that arrangement. **In** this manner, the controller can prohibit the first content group from being displayed on the screen at the same time.

**In** addition, in response to the fact that the first content group includes the second content group, the controller may display on the screen a message notifying that the arrangement of content cannot be changed. This message may be a message notifying the user that the arrangement of content requested by the user is not allowed by the system, or it may be a message that prompts the user to change the arrangement of content. Further, the message may include an inquiry as to whether or not the user agrees to return the arrangement of content to an original arrangement. The controller displays a message on the screen so that the user can be informed of what to do next.

Moreover, the predetermined content may include content displaying an image that changes over time. The predetermined content may also include content that provides at least one of a map including a current location and video playback. Such content places a high processing load on the system, and hence, displaying a plurality of pieces of such content may result in problems. By preventing a plurality of pieces of such content from being displayed, it is possible to suppress the occurrence of problems.

The information processing apparatus may further include a storage configured to store information on the second content group. This information may be obtained in advance from other servers or the like.

Further, in response to the fact that the first content group does not include the second content group, the controller may enable the function of the user interface for storing, in a storage, information on the arrangement of the first content group within the screen. That is, if a combination of pieces of content is unlikely to cause problems, information on the arrangement of the content can be stored in the storage, so that the user can subsequently use the content in that arrangement.

Hereinafter, embodiments of the present disclosure will be described based on the accompanying drawings. The configurations of the following embodiments are examples, and the present disclosure is not limited to the configurations of the embodiments. In addition, the following embodiments can be combined with one another as long as such combinations are possible and appropriate.

### <First Embodiment>

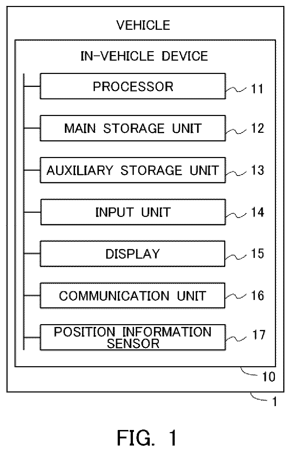

FIG. 1 is a diagram illustrating a schematic configuration of a vehicle 1 according to a first embodiment. The vehicle 1 is a vehicle owned by a user who is a driver. The vehicle 1 is equipped with an in-vehicle device 10. The in-vehicle device 10 may be a multimedia device or a navigation device. In addition, the in-vehicle device 10 may be a device that can be detached from the vehicle 1. The in-vehicle device 10 includes a processor 11, a main storage unit 12, an auxiliary storage unit 13, an input unit 14, a display 15, a communication unit 16, and a position information sensor 17. These components are mutually connected to one another by means of a bus.

The processor 11 is a CPU (Central Processing Unit), a DSP (Digital Signal Processor), or the like. The processor 11 controls the in-vehicle device 10 thereby to perform various information processing operations. The main storage unit 12 is a RAM (Random Access Memory), a ROM (Read Only Memory), or the like. The auxiliary storage unit 13 is an EPROM (Erasable Programmable ROM), a hard disk drive (HDD), a removable medium, or the like. The auxiliary storage unit 13 also stores an operating system (OS), various kinds of programs, various kinds of tables, and the like. The processor 11 loads a program stored in the auxiliary storage unit 13 into a work area of the main storage unit 12 and executes the program, so that each of the component units and the like is controlled through the execution of the program. As a result, the in-vehicle device 10 realizes functions that meet predetermined purposes. The main storage unit 12 and the auxiliary storage unit 13 are examples of a storage unit. Also, the main storage unit 12 and the auxiliary storage unit 13 are computer readable recording media. Note that the in-vehicle device 10 may be a single computer or a plurality of computers that cooperate with one another. In addition, the information stored in the auxiliary storage unit 13 may be stored in the main storage unit 12. Also, the information stored in the main storage unit 12 may be stored in the auxiliary storage unit 13.

Here, note that a series of processing to be executed by the in-vehicle device 10 can be executed by hardware, but can also be executed by software.

The input unit 14 is a means or unit for receiving an input operation performed by a user, and is, for example, a touch panel. As the touch panel, there can be adopted, for example, a pressure-sensitive touch panel, which detects the pressure with which the user presses the panel, and a capacitive touch panel, which detects a change in capacitance when the user presses the panel. Note that as another example, the input unit 14 may be a button capable of operating the display 15. The display 15 is a means or unit that presents information to the user, and is, for example, an LCD (Liquid Crystal Display), an EL (Electroluminescence) panel, or the like. The input unit 14 and the display 15 may be configured as a single touch screen. Note that in the following, when the user touches the screen, it means that the user touches the touch panel.

The communication unit 16 is a communication means or unit for connecting the in-vehicle device 10 to a network N1. In the present embodiment, the in-vehicle device 10 can communicate with other devices via a network by using mobile communication services such as 3G, LTE, 5G, 6G, etc.

The position information sensor 17 obtains position information (e.g., latitude and longitude) of the vehicle 1. The position information sensor 17 is, for example, a GPS (Global Positioning System) receiver unit, a wireless communication unit or the like.

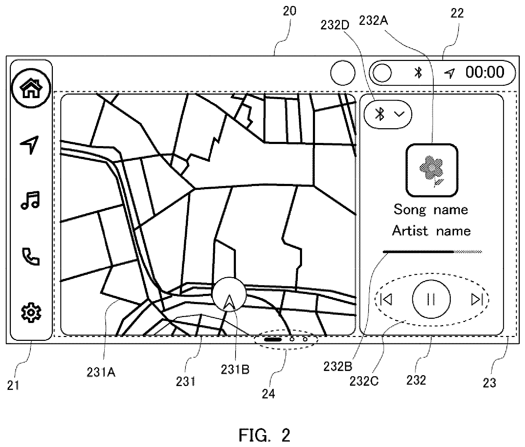

Now, the functions of the in-vehicle device 10 will be described. The in-vehicle device 10 provides content to the user by displaying a screen corresponding to the content on the display 15. FIG. 2 is a view illustrating an example of a home screen 20 displayed on the display 15. The home screen 20 illustrated in FIG. 2 displays a main menu 21, a status icon 22, a main area 23, and a page display 24. The main menu 21 is configured to include a plurality of icons. These icons are used to switch the content displayed in the main area 23. The status icon 22 displays an icon corresponding to the status of each device.

In the example illustrated in FIG. 2, widgets corresponding to pieces of content are arranged in the main area 23. The widgets are shortcut functions that aggregate specific functions to make them easier for the user to access. In the example illustrated in FIG. 2, a map widget 231 and a music widget 232 are displayed as widgets. In the case where content widgets are displayed in the main area 23, when the user taps on a widget, the content corresponding to the tapped widget is displayed in the main area 23. The size of an area (hereinafter, also referred to as a display area) in which the widget is displayed varies depending on the content.

In the map widget 231, an own vehicle position 231B is displayed on a map 231A. The own vehicle position 231B indicates the current location detected by the position information sensor 17. The own vehicle position 231B moves on the map 231A in real time together with the movement of the vehicle 1. Also, the map 231A displayed in the map widget 231 is moved in real time so that the own vehicle position 231B is located in the display range of the map widget 231. The map widget 231 may further display a searched route. The map widget 231 requires a relatively large number of resources.

The music widget 232 displays an image 232A corresponding to a song being played, a time bar 232B indicating the playback position of the currently playing song, icons 232C for selecting playback or stop of the song, playback of the previous song, playback of the next song, etc., an icon 232D for operating the connection with a user's terminal, and so on. The display area of the music widget 232 is shorter in the lateral or horizontal direction than the display area of the map widget 231. The music widget 232 requires fewer resources than the map widget 231.

At the lower portion of the home screen 20, the page display 24 is arranged that indicates a currently displayed page. The page display 24 indicates the total number of pages and the current page. The page currently displayed on the screen is shown as an oval, and the remaining pages are shown as circles. In the example illustrated in FIG. 2, the total number of pages is three, and the first page at the left end is currently displayed. The two pages not displayed on the home screen 20 are also allocated display areas for other widgets. The size of the display area may be set in advance for each widget. The widgets to be displayed on the home screen 20 can be selected by the user from options provided to the user. Also, the order of the widgets can be specified by the user.

The home screen 20 is configured such that page scrolling can be performed by, for example, a swipe operation of the user. By page scrolling, it is possible to display the widgets that have not been displayed on the home screen 20. The widgets include, for example, a video widget, a weather forecast widget, a telephone widget, a vehicle information widget, a clock widget, etc., in addition to the map widget 231 and the music widget 232. The video widget is a widget for displaying a television video or a moving image. The television video may be obtained via a television antenna provided in the vehicle 1. The moving image may be obtained via the communication unit 16 from, for example, a website that distributes moving images. The weather forecast widget is a widget that displays the weather forecast, the current weather, the current temperature, etc. The information on the weather forecast may be obtained from, for example, a website that distributes the weather forecast, via the communication unit 16. The telephone widget is a widget that displays an answer to a telephone call and information of a call destination. The vehicle information widget is a widget that displays the state of the vehicle detected by a sensor of the vehicle. The clock widget is a widget that displays the current time and date. The current time and date may be obtained via the communication unit 16 or via the position information sensor 17. The map widget 231 and the video widget are examples of content that displays an image that changes over time. The map widget 231 and the video widget are examples of content that provides at least one of a map including the current location, and playback of video. Note that the time bar 232B of the music widget 232 can also change over time, but the processing load of the system to handle this change is low, compared to the map widget 231 and the video widget. The processing load of the other widgets is also low, compared to the map widget 231 and the video widget. Therefore, in the present embodiment, the pieces of content other than the map widget 231 and the video widget are those which do not cause drawing or rendering problems even if the pieces of content are displayed on the same page at the same time.

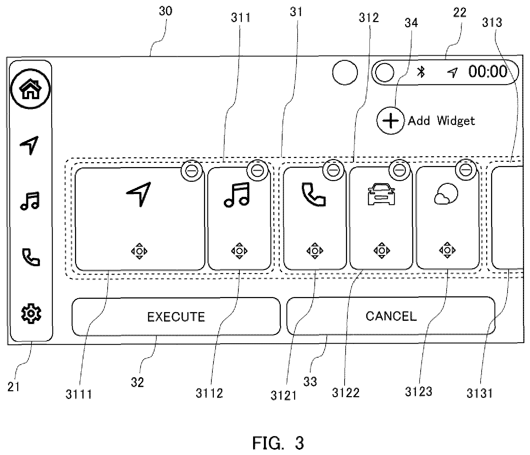

FIG. 3 is a view illustrating an example of a screen 30 (hereinafter referred to as a change screen 30) for changing the arrangement of the widgets displayed on the display 15. The arrangement of the widgets illustrated in FIG. 3 corresponds to the arrangement of the widgets on the home screen 20 illustrated in FIG. 2. When a predetermined input is made from the user on the home screen 20, the screen is switched to the change screen 30. The change screen 30 illustrated in FIG. 3 displays the main menu 21, the status icon 22, and an operation area 31. Further, the change screen 30 has an execute button 32, a cancel button 33, and an add button 34 arranged thereon. These buttons are GUI elements that can be operated by the user touching the screen. The execute button 32 is a button for confirming the change in the arrangement of the widgets, and is a button for storing information on the arrangement of the widgets in the storage unit 110. The cancel button 33 is a button for moving to the home screen 20 without changing the arrangement of the widgets. The add button 34 is a button for adding a new widget. The main menu 21 and the status icon 22 are the same as those illustrated in FIG. 2.

The operation area 31 is an area in which the arrangement of widgets corresponding to each page of the home screen 20 is displayed in a changeable manner. The operation area 31 is divided into a first area 311 corresponding to a first page, a second area 312 corresponding to a second page, and a third area 313 corresponding to a third page. In the first area 311, an icon 3111 corresponding to the map widget and an icon 3112 corresponding to the music widget are displayed in order from the left, as illustrated in FIG. 2. Note that the display area of each icon is set according to the display area of a corresponding widget. The map widget 231 illustrated in FIG. 2 is approximately twice as wide as the music widget 232, and hence the icon 3111 corresponding to the map widget illustrated in FIG. 3 is approximately twice as wide as the icon 3112 corresponding to the music widget. Also, in the second area 312, an icon 3121 corresponding to the telephone widget, an icon 3122 corresponding to the vehicle information widget, and an icon 3123 corresponding to the weather forecast widget are displayed in order from the left. Each icon arranged in the operation area 31 is configured so that it can be moved by dragging and dropping. By dragging an optional icon and moving it to the left or right, the user can change the arrangement order of the icon. Thereafter, the arrangement of the icon is confirmed by the user tapping the execute button 32, and information on the arrangement of the widget corresponding to the arrangement of the icon is stored in the storage unit 110 to be described later.

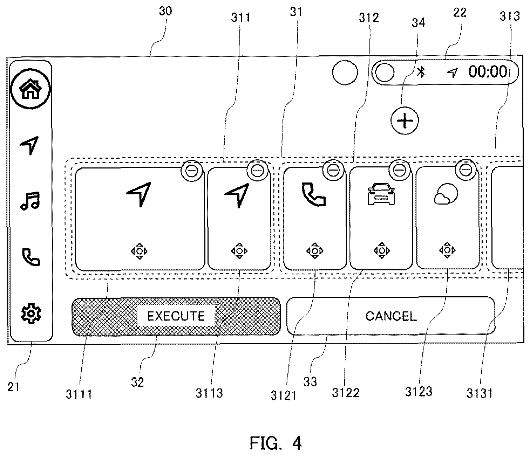

FIG. 4 is a view illustrating another example of the change screen 30. The icon 3111 corresponding to the map widget 231 and an icon 3113 corresponding to a detailed map widget are arranged in the first area 311 by a user operation. The detailed map widget is a widget that displays a map including the current location in a larger scale than the map widget 231. Here, the in-vehicle device 10 according to the present embodiment prohibits the map widget 231 and the detailed map widget from being displayed on the home screen 20. In a case where widgets that are restricted from being arranged in the same area are arranged in the same area, the execute button 32 will be grayed out, and the execute button 32 will not function even if the user taps the execute button 32. That is, it is configured such that the function of the execute button 32 is disabled, and such an arrangement order is not stored in the storage unit 110 to be described later. Note that, in addition to the map widget 231, widgets (e.g., video widget) that may cause resource shortages and rendering problems if displayed on the same page are restricted from being arranged on the same page. For example, in a case where the video widget and the detailed map widget are arranged in the same area, or in a case where two video widgets are arranged in the same area, the execute button 32 is grayed out. In this way, the change screen 30 is configured such that the execute button 32 does not function in a case where icons with a high processing load are arranged in the same area. In this way, it is possible to suppress the widgets with a high processing load on the processor 11 from being displayed on the same page of the home screen 20, thus making it possible to reduce the processing load on the system.

On the other hand, the music widget 232, the telephone widget, the vehicle information widget, the weather forecast widget, the clock widget, and the like have a relatively low processing load on the system. A plurality of widgets with such a relatively low processing load can be displayed on the same page of the home screen 20. For example, it is configured such that when the function of the execute button 32 is enabled and the user taps the execute button 32, information on the arrangement of the widgets is stored in the storage unit 110 to be described later.

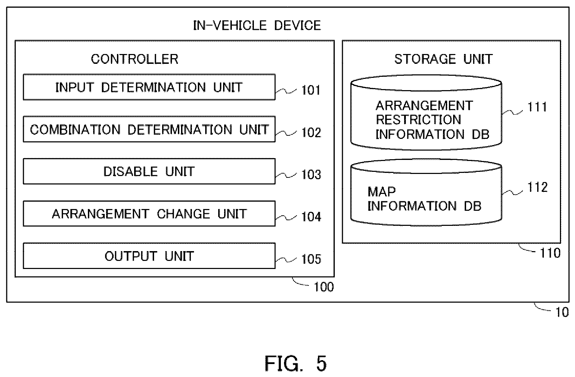

FIG. 5 is a diagram illustrating by way of example a functional configuration of the in-vehicle device 10. The in-vehicle device 10 includes a controller 100 and a storage unit 110 as functional components. The controller 100 is a functional component that is provided by, for example, the processor 11 executing various programs stored in the auxiliary storage unit 13. The controller 100 includes an input determination unit 101, a combination determination unit 102, a disable unit 103, an arrangement change unit 104, and an output unit 105. The processor 11 of the in-vehicle device 10 executes processing of the input determination unit 101, the combination determination unit 102, the disable unit 103, the arrangement change unit 104, and the output unit 105 by a computer program on the main storage unit 12. However, all or a part of the processing may be executed by a hardware circuit.

The storage unit 110 is a means or unit that stores information, and is configured to include the main storage unit 12 and the auxiliary storage unit 13. The storage unit 110 includes an arrangement restriction information DB 111 and a map information DB 112. The arrangement restriction information DB 111 and the map information DB 112 are built by a program of a database management system (DBMS) that is executed by the processor 11 to manage data stored in the auxiliary storage unit 13. The arrangement restriction information DB 111 and the map information DB 112 are, for example, relational databases.

Here, note that any of the individual functional components of the in-vehicle device 10 or a part of the processing thereof may be executed by another or other computers connected to the network.

The input determination unit 101 receives a signal from the input unit 14, and determines a user's input operation via the input unit 14. When the user touches the touch panel, which is the input unit 14, and makes a finger movement associated with a tap, flick, swipe, or pinch, the input determination unit 101 determines that a tap, flick, swipe, or pinch operation has been performed. Also, the input determination unit 101 may be capable of determining an input operation such as a double tap, a long tap, and a multi-tap in addition to a tap, a flick, a swipe, or a pinch. The relationship between the user's finger movements and the user's input operations is stored in the storage unit 110. In addition, the input determination unit 101 determines whether or not the user has performed an operation via the input unit 14 to display the change screen 30 for changing the arrangement of the widgets. For example, when the user performs a long tap on the main area 23 of the home screen 20, the input determination unit 101 determines that the user has performed an operation for displaying the change screen 30. Moreover, as another example, when the user taps a settings icon in the main menu 21 and then further taps an icon for changing the arrangement of the widgets, the input determination unit 101 may determine that the user has performed an operation for displaying the change screen 30. Further, when the user drags and drops an icon on the change screen 30, the input determination unit 101 determines that an input for moving the icon has been made. Thus, by determining that an input for moving an icon has been made, the input determination unit 101 receives in real time a request to change the arrangement of content within the screen. In addition, the input determination unit 101 determines whether or not the user has pressed the execute button 32, and whether or not the user has pressed the cancel button 33.

The combination determination unit 102 determines whether or not a predetermined combination of widgets is arranged in the same area in each of the first area 311, the second area 312, and the third area 313 of the change screen 30. The predetermined combination of widgets is an example of the second content group. The predetermined combination is a combination of widgets that are prohibited from being displayed on the same page of the home screen 20, and is also a combination of widgets that are prohibited from being displayed in the same area of the change screen 30. Information on the predetermined combination is stored in the arrangement restriction information DB 111 in advance. The combination determination unit 102 determines whether or not the predetermined combination of widgets is arranged in the same area, by determining whether or not the widgets arranged in the same area correspond to the combination stored in the arrangement restriction information DB 111 on the change screen 30. The combination determination unit 102 passes the determination result to the disable unit 103.

When the predetermined combination of widgets is arranged in the same area of the change screen 30, the disable unit 103 disables the execute button 32 for storing the arrangement. In other words, the disable unit 103 prevents the information on the arrangement from being stored in the storage unit 110. The disable unit 103 may disable the execute button 32, for example, by graying out the execute button 32 or by not displaying the execute button 32. In addition, when the user taps the execute button 32, the disable unit 103 may display a text on the display 15 notifying that the current arrangement is not allowed by the system. Further, when the user taps the execute button 32, the disable unit 103 may display on the display 15 a text, which inquires whether to return the arrangement of icons to its original position, and a button for the user to input an answer to the inquiry.

The arrangement change unit 104 changes the arrangement of widgets in response to a user's drag and drop operation on the change screen 30. When the execute button 32 is pressed on the change screen 30, the arrangement change unit 104 stores in the storage unit 110 the arrangement order of the icons of the widgets displayed on the change screen 30.

The output unit 105 displays an image corresponding to each widget on the home screen 20 in a display area corresponding to each widget. The output unit 105 displays the widgets on the home screen 20 in accordance with the arrangement order of the widgets stored in the storage unit 110. The output unit 105 generates real-time images corresponding to the widgets, and displays them on the display 15. For example, in the case of the map widget 231, the output unit 105 obtains the current location obtained by the position information sensor 17, and displays the own vehicle position 231B on the map 231A obtained from the map information DB 112. The output unit 105 generates an image corresponding to each widget for each frame, generates a signal for displaying the home screen 20 for each frame, and transmits the signal to the display 15. In addition, the output unit 105 may output the change screen 30 when the input determination unit 101 determines that the user has performed an operation for displaying the change screen 30 via the input unit 14. The output unit 105 displays the icons corresponding to the widgets on the change screen 30 in accordance with the arrangement order of the widgets stored in the storage unit 110.

The arrangement restriction information DB 111 stores information on a combination of widgets that cannot be displayed on the same page of the home screen 20 (hereinafter also referred to as "arrangement restriction information"). The arrangement restriction information may be provided from an external server connected to the network.

Moreover, the map information DB 112 stores map information including map data and POIs (Points of Interest) such as texts and/or photographs indicating the characteristics of each point on the map data. Note that the map information DB 112 may be provided from other systems connected to the network such as, for example, a GIS (Geographic Information System). The map data includes, for example, link data related to roads (links), node data related to node points, intersection data related to each intersection, search data for searching routes, facility data related to facilities, search data for searching points or locations, etc.

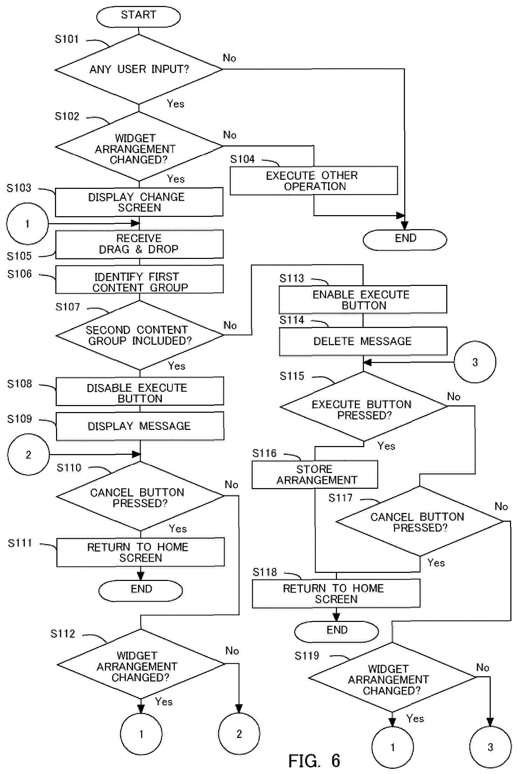

Next, processing in the in-vehicle device 10 when the arrangement order of widgets is changed on the change screen 30 will be described. FIG. 6 is a flowchart of processing in the in-vehicle device 10 when the arrangement order of widgets is changed on the change screen 30 according to the present embodiment. The processing illustrated in FIG. 6 is executed in the in-vehicle device 10 with an operation of the user input to the input unit 14 as a trigger.

In step S101, the input determination unit 101 determines whether or not there has been an input from the user to the input unit 14. For example, upon detecting, based on a signal from the input unit 14, that the user has touched the screen, the input determination unit 101 determines that an input has been made by the user. Note that in the present embodiment, a touch panel is given as an example of the input unit 14, but the input unit 14 is not limited thereto, and for example, a button arranged on a steering wheel may be adopted as the input unit 14. Then, for example, when the user presses a button arranged on the steering wheel, it may be determined that an input has been made by the user. If the input determination unit 101 makes an affirmative determination in step S101, the processing proceeds to step S102, but if the input determination unit 101 makes a negative determination, this routine ends.

In step S102, the input determination unit 101 determines whether or not the input from the user is an input for changing the arrangement of widgets. The input determination unit 101 determines, for example, whether or not the input from the user is an input to display the change screen 30. The input determination unit 101 determines, based on the input from the user to the input unit 14 and the information on the operation for displaying the change screen 30 stored in the storage unit 110, whether or not the input from the user corresponds to the input to display the change screen 30. Note that, as another example, when the user presses a button corresponding to the display of the change screen 30 arranged on the steering wheel, the input determination unit 101 may determine that the input from the user is an input for changing the arrangement of widgets. If the input determination unit 101 makes an affirmative determination in step S102, the processing proceeds to step S103, but if the input determination unit 101 makes a negative determination in step S102, the processing proceeds to step S104. In step S104, the controller 100 executes processing corresponding to an operation other than the display of the change screen 30.

In step S103, the output unit 105 displays the change screen 30 on the display 15. Here, the arrangement order of the widgets on the home screen 20 is stored in the storage unit 110. The output unit 105 displays the icons corresponding to the widgets on the change screen 30 in accordance with the arrangement order of the widgets stored in the storage unit 110.

In step S105, the input determination unit 101 receives a user's drag and drop operation. In this way, the input determination unit 101 receives a request for a change in the arrangement of content within the screen. The input determination unit 101 identifies the position at which the user has dragged an icon, and identifies the icon thus dragged, based on the position at which the user has dragged the icon. Further, the input determination unit 101 identifies the position at which the user has dropped the icon. Note that the output unit 105 may animate the icon in real time in such a manner that the icon moves from the position at which the user drags the icon to the position at which the icon is dropped, in response to the operation of a user's finger.

In step S106, the combination determination unit 102 identifies a first content group, which is a combination of content to be displayed on the screen at the same time. The combination determination unit 102 identifies the icons (which may also be widgets) arranged in each of the first area 311, the second area 312, and the third area 313 within the operation area 31 in accordance with a signal from the input unit 14 (i.e., user input).

In step S107, the combination determination unit 102 determines whether the first content group includes a predetermined combination of widgets (second content group) in each of the first area 311, the second area 312, and the third area 313. The combination determination unit 102 determines whether a combination of widgets stored in the arrangement restriction information DB 111 is included for each area. Then, if at least one area contains a predetermined combination of widgets, the combination determination unit 102 makes an affirmative determination. If the combination determination unit 102 makes an affirmative determination in step S107, the processing proceeds to step S108, but if the combination determination unit 102 makes a negative determination in step S107, the processing proceeds to step S113.

In step S108, the disable unit 103 disables the function of the execute button 32. The disable unit 103 grays out the execute button 32 and at the same time disables the function thereof so that the execute button 32 does not function even if the user touches the execute button 32. Thus, the disable unit 103 prevents the arrangement order of the widgets from being stored in the storage unit 110. The disable unit 103 generates a signal to display the grayed-out execute button 32 on the screen and outputs the signal to the display 15. Note that, as another example, the disable unit 103 may return the arrangement order of the widgets to the state before the user performs the drag and drop operation.

Further, in step S109, the disable unit 103 displays a message on the display 15 indicating that the arrangement changed by the user is not allowed by the system. This message may be a message notifying the user that the arrangement of the widgets designated by the user is not acceptable, or a message for prompting the user to review the arrangement of the widgets. Note that the disable unit 103 may display the above-mentioned message when the user presses the execute button 32, or may display the above-mentioned message immediately after the drag and drop operation. In addition, the processing in step S109 may be omitted.

In step S110, the input determination unit 101 determines whether or not the cancel button 33 has been pressed. The input determination unit 101 makes an affirmative determination when the user taps a position at which the cancel button 33 is displayed. The position at which the cancel button 33 is displayed is stored in the storage unit 110. If the input determination unit 101 makes an affirmative determination in step S110, the processing proceeds to step S111, but if the input determination unit 101 makes a negative determination in step S110, the processing proceeds to step S112.

In step S111, the output unit 105 returns the screen to be displayed on the display 15 to the home screen 20. The arrangement of the widgets to be displayed on the home screen 20 is stored in the storage unit 110. The arrangement of the widgets stored in the storage unit 110 is the arrangement before the user changes the arrangement of the widgets on the change screen 30, and hence, the output unit 105 displays the home screen 20 with the arrangement of the widgets in the state before switching to the change screen 30.

In addition, in step S112, the input determination unit 101 determines whether or not the arrangement of the widgets has been changed by the user. For example, the input determination unit 101 determines whether or not an icon has been dragged. If the input determination unit 101 makes an affirmative determination in step S112, the processing returns to step S105, but if the input determination unit 101 makes a negative determination in step S112, the processing returns to step S109. Then, the processing from step S105 to step S112 is repeatedly executed by the controller 100 until the second content group is no longer included in the first content group arranged in the same area.

On the other hand, if the combination determination unit 102 makes a negative determination in step S107, the disable unit 103 enables the function of the execute button 32 in step S113. This allows the user to press the execute button 32. Note that when the change screen 30 is displayed in step S103, the function of the execute button 32 is enabled by default. Then, in step S114, the disable unit 103 deletes the message displayed in step S109. Also, note that if no message has been displayed, the disable unit 103 advances the processing to the next step S115 without performing the processing of erasing the message.

In step S115, the input determination unit 101 determines whether or not the execute button 32 has been pressed by the user. The input determination unit 101 makes an affirmative determination when the user taps a position at which the execute button 32 is displayed. The position at which the execute button 32 is displayed is stored in the storage unit 110. If the input determination unit 101 makes an affirmative determination in step S115, the processing proceeds to step S116, but if the input determination unit 101 makes a negative determination in step S115, the processing proceeds to step S117.

In step S116, the arrangement change unit 104 stores the arrangement order of the icons of the widgets displayed on the change screen 30 in the storage unit 110. As a result, the arrangement order of the widgets is updated. On the other hand, in step S117, the input determination unit 101 determines whether or not the cancel button 33 has been pressed by the user. If the input determination unit 101 makes an affirmative determination in step S117, the processing proceeds to step S118, but if the input determination unit 101 makes a negative determination in step S117, the processing proceeds to step S119.

In step S118, the output unit 105 generates the home screen 20 in such a manner that the widgets are arranged in the arrangement order stored in the storage unit 110, and displays the home screen 20 on the display 15. That is, the output unit 105 returns the screen to be displayed on the display 15 from the change screen 30 to the home screen 20.

In step S119, the input determination unit 101 determines whether or not the arrangement of the widgets has been changed by the user. If the input determination unit 101 makes an affirmative determination in step S119, the processing returns to step S105, but if the input determination unit 101 makes a negative determination in step S119, the processing returns to step S114.

As described above, according to the present embodiment, it is possible to suppress the occurrence of problems because the settings for simultaneous display cannot be stored or saved for content that may cause problems if displayed on the same screen at the same time.

### <Other Embodiments>

The above-described embodiment is merely an example, but the present disclosure can be implemented with appropriate modifications without departing from the spirit thereof. The processing and/or means (devices, units, etc.) described in the present disclosure can be freely combined and implemented as long as no technical contradiction occurs. In addition, the processing described as being performed by one device or unit may be shared and performed by a plurality of devices or units. Alternatively, the processing described as being performed by different devices or units may be performed by a single device or unit. In a computer system, it is possible to flexibly change what hardware configuration is used to realize each function.

In the above-mentioned embodiment, an example has been described in which the in-vehicle device 10 functions as an information processing apparatus, but the present invention is not limited to this, and for example, a user's mobile terminal may function as an information processing apparatus, or an external server may function as an information processing apparatus.

Moreover, in the first embodiment, it is configured such that the user is able to change the arrangement of the widgets after moving from the home screen 20 to the change screen 30, but the present invention is not limited thereto, and can be similarly applied to a configuration in which the user is able to directly change the arrangement of the widgets on the home screen 20. In this case, the user may directly drag and drop the widgets on the home screen 20.

Although a combination of content that increases the processing load of the CPU or the like has been described as an example of the content that may cause problems when displayed on the same screen at the same time, the content that should not be displayed at the same time are not limited thereto. For example, if the amount of text (the number of characters) displayed on the home screen 20 increases, the home screen 20 may become difficult for the user to view. Therefore, for example, the display of widgets may be restricted in such a manner that a plurality of widgets having a predetermined number or more of characters are not displayed on the same page of the home screen 20. The combination of widgets whose display is restricted may be stored in the storage unit 110 in advance. In addition, each time the user changes the arrangement of the widgets, the controller 100 may calculate the number of characters to determine whether or not the combination of the widgets has the predetermined number or more of characters. Also, the content may be restricted in such a manner that the number of characters displayed on the entire home screen 20 or the number of characters displayed in the main area 23 is less than the predetermined number. Examples of the content having a large number of characters include, for example, news widgets and weather forecast widgets.

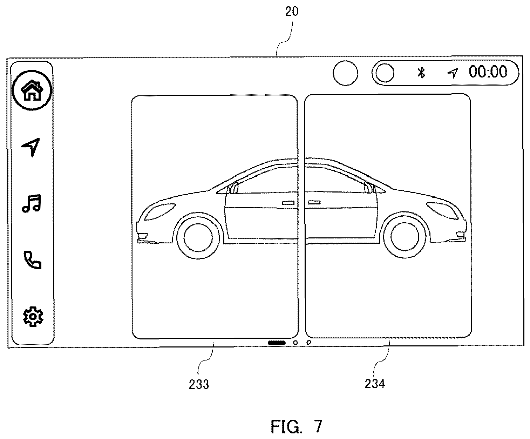

In addition, as another example, a combination of content that may cause the user to feel uncomfortable when viewing the home screen 20 may be restricted. FIG. 7 illustrates an example of the home screen 20 that may cause the user to feel uncomfortable. A left widget 233 shows the front of a vehicle facing to the left and a right widget 234 shows the front of a vehicle facing to the right. When viewed as a whole, it may look like a single vehicle, and the user may feel uncomfortable. **In** this way, in cases where there is a risk that the display of the adjacent widgets is erroneously recognized as one image as a whole, the user may feel uncomfortable. Such a combination of widgets may be stored in the storage unit **110** in advance, and the controller 100 may restrict such a combination of widgets from being displayed on the same screen at the same time.

Further, as another example, pieces of content having a function of playing music may be restricted from being displayed at the same time. For example, for widgets that have a function of playing music, when one widget is active, the other widgets are deactivated. For this reason, the widgets cannot be operated simultaneously even if arranged on the same page. In this way, the controller 100 may restrict a combination of widgets, in which activation of one widget disables the other widgets, from being displayed on the same screen. Also, for example, the controller 100 may impose restrictions so that a widget for playing music and a widget for playing video are not arranged on the same screen.

Moreover, a message notifying that the arrangement of content cannot be changed may be remain displayed until the order of arrangement is changed to one without problems. As another example, the message may be displayed in the form of a dialog, modal, or pop-up. Then, in cases where a message is displayed in the form of a dialog, modal, or pop-up, if the user agrees with the message and taps a predetermined location, the controller 100 may return the change screen 30 to the state before the user made the change. Also, in cases where a predetermined combination of widgets are arranged in the same area, the controller 100 may highlight the frames or icons of the widgets to make them stand out.

In addition, in FIGS. 2 through 4, an example in which widgets (content) are lined up in the lateral direction has been described, but the direction in which the content are lined up is not limited thereto, and for example, the content may be lined up in the vertical direction, or may be line up in the vertical direction and the lateral direction.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An information processing apparatus (10) comprising a controller configured to execute:
receiving a signal from a sensor (14) that detects when a user touches a screen (15);
identifying in real time a first content group (3111, 3112, 3113), which is a combination of content displayed on the screen (15) at the same time, according to the signal from the sensor (14) in a case where an arrangement of content is changed in response to the fact that the signal from the sensor (14) is a signal corresponding to a change in the arrangement of the content within the screen (15);
determining in real time whether or not the first content group (3111, 3112, 3113) includes a second content group (3111, 3113) that is a predetermined combination of content, according to information on the second content group (3111, 3113) stored in a storage (110); and
disabling, in response to a determination that the first content group (3111, 3112, 3113) includes the second content group (3111, 3113), in real time a function of a user interface (32) for storing, in the storage (110), information on an arrangement of the first content group (3111, 3112, 3113) within the screen (15), and outputting in real time a signal for displaying on the screen (15) an image (32) corresponding to the disabling of the function of the user interface (32).

2. An information processing apparatus (10) comprising a controller configured to execute:
receiving a request for a change in an arrangement of content within a screen (15);
identifying a first content group (3111, 3112, 3113), which is a combination of content displayed on the screen (15) at the same time, in a case where the arrangement of the content is changed in response to the request; and
prohibiting the first content group (3111, 3112, 3113) from being displayed on the screen (15) at the same time in response to the fact that the first content group (3111, 3112, 3113) includes a second content group (3111, 3113) that is a combination of predetermined content.

3. The information processing apparatus (10) according to claim 2, wherein in response to the fact that the first content group (3111, 3112, 3113) includes the second content group (3111, 3113), the controller prohibits the first content group (3111, 3112, 3113) from being displayed on the screen (15) at the same time by disabling a function of a user interface (32) for storing, in a storage (110), information on an arrangement of the first content group (3111, 3112, 3113) within the screen (15).

4. The information processing apparatus (10) according to claim 2, wherein in response to the fact that the first content group (3111, 3112, 3113) includes the second content group (3111, 3113), the controller displays on the screen (15) a message notifying that the arrangement of the content cannot be changed.

5. The information processing apparatus (10) according to claim 2, wherein the predetermined content (3111, 3113) includes content displaying an image that changes over time.

6. The information processing apparatus (10) according to claim 2, wherein the predetermined content (3111, 3113) include content that provides at least one of a map including a current location, and video playback.

7. The information processing apparatus (10) according to claim 2, further comprising a storage (110) that stores information on the second content group (3111, 3113).

8. The information processing apparatus (10) according to claim 2, wherein in response to the fact that the first content group (3111, 3112, 3113) does not include the second content group (3111, 3113), the controller enables the function of the user interface (32) for storing, in a storage (110), information on an arrangement of the first content group (3111, 3112, 3113) within the screen (15).

9. An information processing method for causing a computer (10) to execute:
receiving a request for a change in an arrangement of content within a screen (15);
identifying a first content group (3111, 3112, 3113), which is a combination of content displayed on the screen (15) at the same time, in a case where the arrangement of the content is changed in response to the request; and
prohibiting the first content group (3111, 3112, 3113) from being displayed on the screen (15) at the same time in response to the fact that the first content group (3111, 3112, 3113) includes a second content group (3111, 3113) that is a combination of predetermined content.

10. The information processing method according to claim 9, wherein in response to the fact that the first content group (3111, 3112, 3113) includes the second content group (3111, 3113), the computer (10) prohibits the first content group (3111, 3112, 3113) from being displayed on the screen (15) at the same time by disabling a function of a user interface (32) for storing, in a storage (110), information on an arrangement of the first content group (3111, 3112, 3113) within the screen (15).

11. The information processing method according to claim 9, wherein in response to the fact that the first content group (3111, 3112, 3113) includes the second content group (3111, 3113), the computer (10) displays on the screen (15) a message notifying that the arrangement of the content cannot be changed.

12. The information processing method according to claim 9, wherein the predetermined content (3111, 3113) includes content displaying an image that changes over time.

13. The information processing method according to claim 9, wherein the predetermined content (3111, 3113) include content that provides at least one of a map including a current location, and video playback.

14. The information processing method according to claim 9, wherein the computer (10) stores information on the second content group (3111, 3113) in a storage **(110).**

15. The information processing method according to claim 9, wherein in response to the fact that the first content group (3111, 3112, 3113) does not include the second content group (3111, 3113), the computer (10) enables the function of the user interface (32) for storing, in a storage (110), information on an arrangement of the first content group (3111, 3112, 3113) within the screen (15).
